(19) Europäisches Patentamt

European Patent Office

Office européen des brevets

(11) EP 1 336 432 A2

(12) EUROPEAN PATENT APPLICATION

(43) Date of publication:
20.08.2003 Bulletin 2003/34

(51) Int Cl.$^7$: B01J 19/00

(21) Application number: 03250835.0

(22) Date of filing: 11.02.2003

(84) Designated Contracting States:
AT BE BG CH CY CZ DE DK EE ES FI FR GB GR
HU IE IT LI LU MC NL PT SE SI SK TR
Designated Extension States:
AL LT LV MK RO

(30) Priority: 15.02.2002 GB 0203653

(71) Applicant: Syrris Limited
Royston, Herts SG8 5HW (GB)

(72) Inventors:
• Gilligan, Mark Peter Timothy
Hertfordshire SG2 7BS (GB)

• Homewood, Philip James
Cambridge CB4 3HG (GB)
• Whiffin, Rowland
Hitchin, Hertfordshire SG4 9ST (GB)

(74) Representative: Draper, Martyn John et al
Boult Wade Tennant
Verulam Gardens
70 Gray's Inn Road
London WC1X 8BT (GB)

(54) A microreactor

(57) A method of optimising a reaction in a microreactor. Two reaction fluids A,B as supplied to a microchannel 6 and their relative proportions are varied in a controlled manner. A sensor 13 monitors a reaction characteristic and determines the relative proportion of the fluids which optimises the yield of the reaction product. The total flow rate can also be varied at the optimum relative proportion in order to determine the maximum overall flow rate at which completion of the reactions still occurs.

FIG. 2.

**Description**

Miniaturisation of laboratory processes is considered to be of key importance in the future of biological and chemistry science. Chemical and biological reactions happen faster at microscale as a result of low diffusion distances and efficient heat transfer. Less material is used in reactions resulting in cheaper and more environmentally friendly operation. Microfluidic devices have other potential benefits above conventional systems including, simple integration of devices, access to information about reaction kinetics and easy scale up.

Microfluidic systems are currently available for a number of applications in the biology field, for example DNA sequencing on a chip. Such systems are designed to carry out one or a series of biochemical reactions that are understood well and have known outcomes.

Commercially available microfluidic products for the chemistry lab are however limited. This invention is particularly directed to performing chemical reactions on a microscale, where little is know about the reaction mechanism or products of the reaction. This is typically the scenario in a chemistry lab where a diverse range of chemical reactions are carried out to make a wide variety of products. When a new reaction is carried out at microscale, the result may be variable in yield or purity.

According to a first aspect of the present invention there is provided a microreactor comprising a reaction channel; a first reaction fluid supply system comprising a reservoir of a first reaction fluid, a means to deliver a controlled amount of the first reaction fluid to flow through the reaction channel, and means to monitor the flow of the first reaction fluid into the reaction channel; a second reaction fluid supply system comprising a reservoir of a second reaction fluid, a means to deliver a controlled amount of the second reaction fluid to flow through the reaction channel, and means to monitor the flow of the second reaction fluid into the reaction channel; a sensor to monitor a characteristic of the reaction fluid produced when the first and second reaction fluids react; and a controller which receives inputs from the means to monitor the flow of the first and second reaction fluids and from the sensor and controls the means to deliver the controlled amount of first and second reaction fluids to the reaction channel, wherein the controller is arranged to vary across a range of values the relative proportions of the first and second reaction fluids fed to the reaction channel and to detect the relative proportions of the first and second reaction fluids which optimise the yield of the reaction product.

This allows the reactor to determine automatically and very quickly the relative proportion of the two fluids required to optimise the yield.

If some information is known about the nature of the two reaction products, it may only be necessary to vary their proportions over a limited range of values. However, alternatively, the relative proportions are varied across a range of values from pure first reaction fluid to pure second reaction fluid.

According to a second aspect of the invention, the controller is arranged to vary the overall amount of the first and second fluids supplied to the reaction channel at a fixed relative proportion to determine the maximum overall flow rate at which completion of the reaction still occurs. This enables the optimum throughput of the two reactions products to be determined thereby optimising the yield. When the first and second aspects of the invention are used together the optimisation of the yield is carried out at the optimum relative proportions determined by the first aspect of the invention. On the other hand, if a user is already aware of the optimum relative proportion, the second aspect of the invention can be carried out independently of the first aspect at the known optimum relative proportion.

The present invention also extends to a method of reaction optimisation in a microreactor, the method comprising supplying first and second reaction fluids to flow through the channel, monitoring the flows of the two reaction fluids, monitoring the amount of reaction product in the reaction channel, varying the relative proportions of the two reaction fluids and determining the relative proportions of the first and second reaction fluids which optimise the yield of the reaction product.

The method preferably also further comprises varying the overall amount of the first and second fluids supplied to the channel at the optimum relative proportions and determining the maximum overall flow rate at which completion of the reaction still occurs.

In order to determine the optimum relative proportions, the method preferably further comprises determining an optimum reaction characteristic by the steps of measuring the reaction characteristic purely of the first reaction fluid; measuring the reaction characteristic purely of the second reaction fluid; generating a no-reaction line which is a straight line in between the two measured values for the pure reaction products; measuring the reaction characteristic as the relative proportions of the fluids are varied across a range of values; and determining the relative proportions of the first and second reaction fluids at which the reaction characteristic differs to the greatest extent from the no-reaction line.

The term "microreactor" and associated term "microchannel" are believed to be terms which are clearly understood in the art. The terms are best understood functionally as relating to reactors/channels which are sufficiently small that diffusional mixing predominates and efficient heat transfer occurs, resulting in optimal reaction conditions in the microchannel.

The dimensions should be sufficiently small that the flow results in a low Reynolds number ($<10^3$) and a predominantly laminar flow regime.

Generally, at its narrowest point, the reactor/channel should have, in cross-section, a maximum internal dimension of 5-500μm, and preferably 5-250μm. However, it is possible to envisage a channel which has a long thin cross-section having a dimension greater than 500μm, but which still operates as a microreactor as it is small in other dimensions. Therefore, it might be more appropriate to define a microreactor/microchannel as having, at its narrowest part, a cross-section in a plane perpendicular to the flow direction which is sized so that the largest circle which can be drawn in the cross-section has a diameter of less than 500μm (and preferably less than 250μm). In other words, if the cross-section is such that a circle of greater than 500μm can be drawn within the cross-section, it will not operate as a microchannel.

An example of a reactor and method in accordance with the present invention will now be described with reference to the accompanying drawings, in which:

Fig. 1 is a schematic outlining the broad principle on which the present invention is based;

Fig. 2 is a schematic showing a microreactor in accordance with the present invention;

Fig. 3 is a graph of relative proportions of the reaction fluids against a reaction characteristic;

Fig. 4 is a graph similar to Fig. 3 showing the determination of the optimum ratio;

Fig. 5 is a graph similar to Fig. 4 for a different type of reaction;

Fig. 6 is a graph of total flow rate against reaction characteristic showing the determination of the optimum flow rate for the reaction of Fig. 4;

Fig. 7 is a graph similar to Fig. 6 for the reaction of Fig. 5; and

Fig. 8 is a schematic cross-section showing a cross-section of the channel.

This disclosure describes a technology to optimise the yield and output of chemical reactions taking place in a microreactor.

A microreactor is a microfluidic device used for carrying out chemical reactions. In a typical microreactor chemical reagents flow along microchannels and react when combined at flow junctions. Microchannel dimensions are in the range of 5-500μm (internal diameter). This results in flow with low Reynolds numbers ($<10^3$) and a predominantly laminar flow regime. In a laminar flow regime diffusional mixing defines the rate of chemical reactions. The rate of diffusion between two chemical reagents in a microreactor is defined by Fick's law. The following reaction will be used to discuss the invention:

$$A + B \rightarrow C$$

A, B and C are typically in a solution. In practice A, B or C may represent more than one chemical and the reaction may be reversible and may require a catalyst.

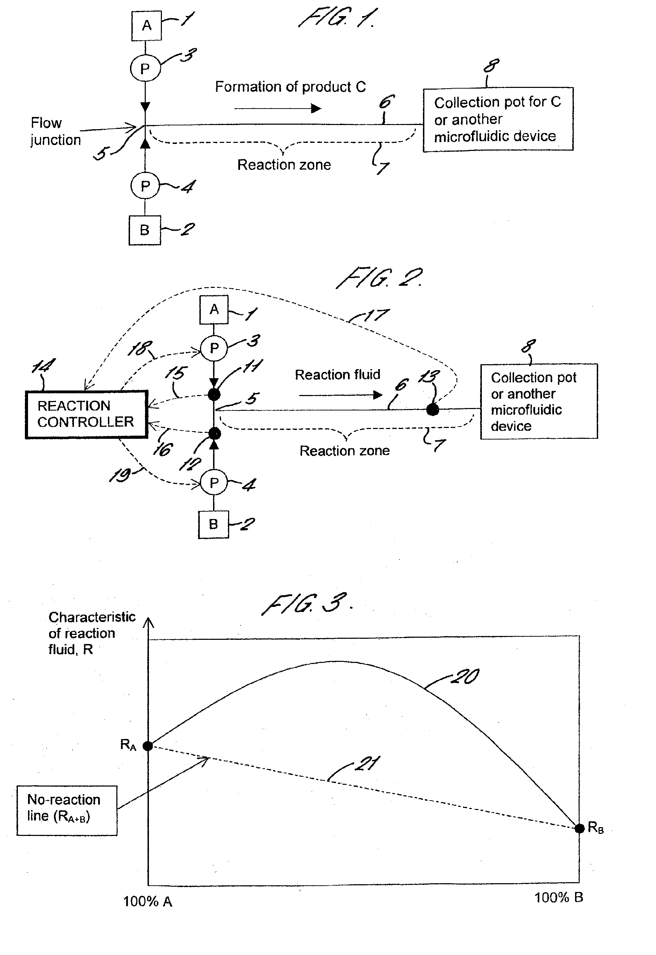

Fig. 1 shows a typical layout of a microreactor. The microreactor comprises a first reservoir 1 containing chemical reagent A and a second reservoir 2 containing chemical reagent B. Chemical reagents A and B are pumped by respective first 3 and second 4 pumps to a flow junction 5 where they meet and mix. They then flow along a microchannel 6 which provides a reaction zone 7 in which A and B combine via diffusion. The reaction product C is collected in a collection pot 8, or is sent to a further microfluidic device.

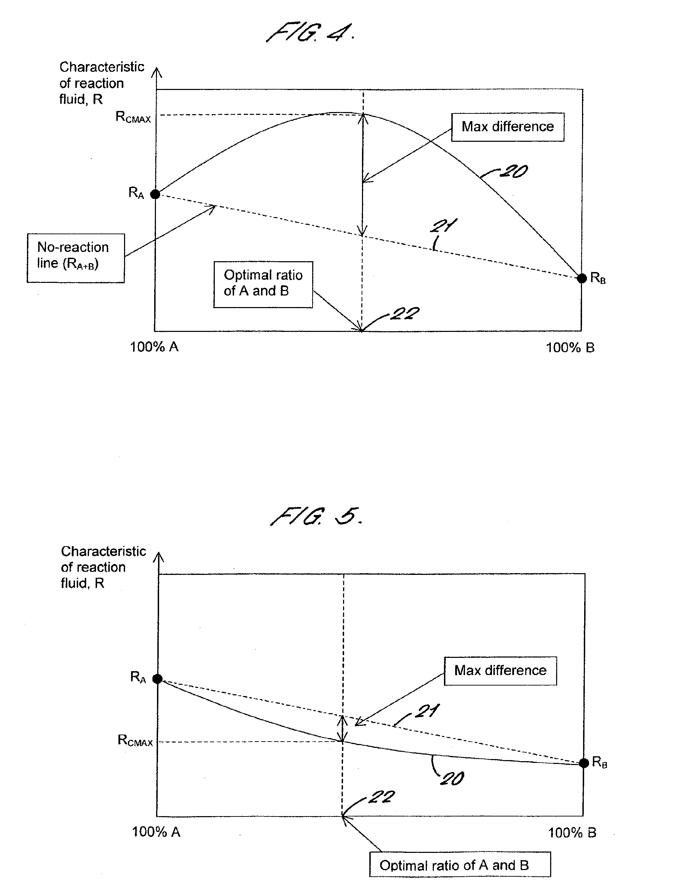

The way in which the reaction is optimised will now be described with reference to Fig. 2. This is the same basic arrangement as shown with respect to Fig. 1, and the same reference numerals have been used to represent the same components. In Fig. 2, first 11 second 12 and third 13 sensors are shown. The first sensor 11 monitors a flow characteristic of chemical A into the microchannel 6, the second sensor 12 monitors a flow characteristic of the second chemical B into the microchannel 6, while the third sensor 13 monitors a characteristic of the reaction product C. Possible sensors include infra red absorption sensors, UV light absorption sensors and nuclear magnetic resonance measurement sensors. The sensors may also be electrode pairs for sensing the impedance of the reaction fluid as described in our co-pending application GB 0203661.4. Sensing could occur over a frequency spectrum. Each sensor provides an input to the reaction controller 14 along lines 15, 16 and 17 respectively. The reaction controller then provides an output along lines 18 and 19 to control the flow through the first 3 and second 4 pumps respectively. In addition to the first and second sensors, the flow rate from each pump 3, 4 may be monitored to give an indication of the flow rates of the first A and second B chemicals.

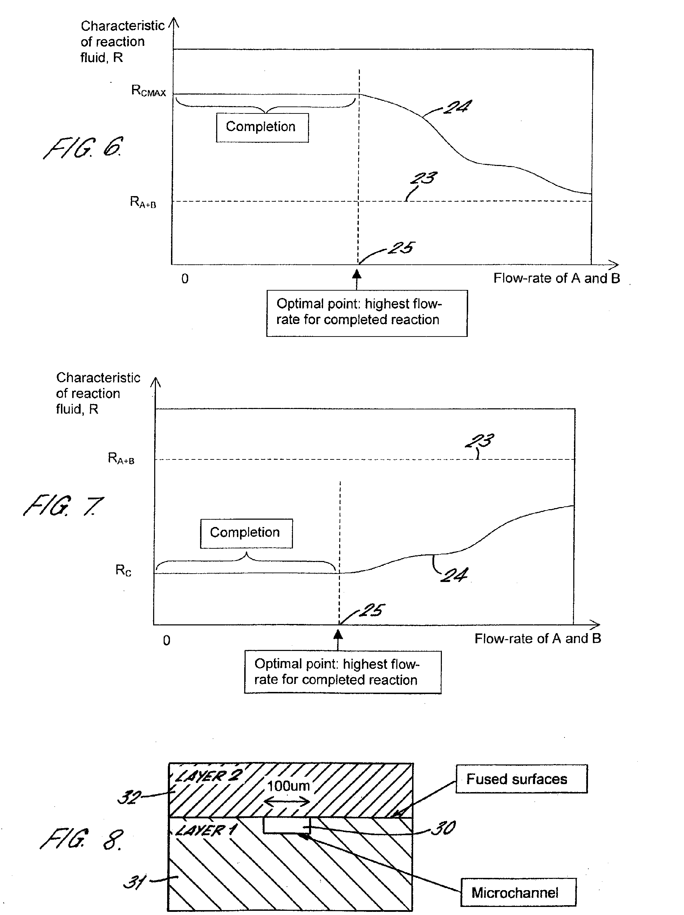

The way in which the reaction controller 14 is operated to optimise the reaction will now be described with reference to Figs. 3 to 7.

Fig. 3 is a graph showing how the ratios of A to B are varied over a range from pure A (left hand side of Fig. 3) to pure B (right hand side of Fig. 3). A characteristic of the reaction product is measured as characteristic curve 20. The reaction characteristic of pure A is shown as points $R_A$, while the reaction characteristic of pure B is shown $R_B$.

The dashed line 21 is the no-reaction line. This describes the way that the chemical characteristic of the reaction fluid would vary if no reaction took place (A and B just mixed with no reaction taking place). The point at which the concentration of C is at a maximum occurs when the difference between characteristic of reaction fluid 20 and the no-reaction line 21 is at a maximum as shown in Fig. 4. $R_{CMAX}$ is the characteristic of the reaction fluid when the concentration of C is at a maximum. This corresponds to the optimum ratio of A and B defined at point 22. This optimum ratio can be obtained by plotting ((Characteristic of reaction fluid) - (no-reaction line $(R_A+_B)$)) as a curve. The maximum or minimum of this curve occurs when the gradient of this curve =O.

Fig. 5 shows a different scenario where the reaction characteristic of C is less than the reaction characteristic of A. However, the same principle applies in determining the maximum difference between the no-reaction line 21 and the characteristic curve 20 of the reaction fluid.

Having determined the optimum ratio of A and B, the total flow rate of reagents A and B can now be optimised as described with reference to Figs. 6 and 7.

A characteristic of the reaction fluid C is again measured with sensor 13. The total flow rate of A and B is then varied at a fixed ratio of A and B. By doing this it is possible to identify the point at which the reaction A+B→C has reached completion at sensor 13 and the flow rate of A and B is as high as possible. $R_{A+B}$ is the no-reaction line 23, or the characteristic of the reaction fluid if no reaction took place. The reaction characteristic measured by the sensor 13 is shown as line 24. If the characteristic $R_{CMAX}$ of the reaction fluid is less than $R_{A+B}$ (i.e. the situation of Fig. 5) then the graph will be as shown in Fig. 7.

It is assumed that when the reaction reaches completion then the chemical characteristic being measured will stabilise. In practice most chemical reactions do not go to completion but reach equilibrium:

$$A + B \leftrightarrow C$$

At equilibrium the concentrations of A, B and C stabilise, hence the chemical characteristic being measured will also stabilise. At low flow rate, the reaction will go to completion as shown by the straight line portion of line 24 in Figs. 6 and 7. It is desirable to keep the flow rate as high as possible to optimise the output of C.

If the flow rate is increased above the optimal point then the reaction will only be partially complete at sensor 13. In most applications it is desirable to optimise the concentration of C so the optimal flow rate represented by point 25 is the highest flow rate that allows reaction completion/equilibrium.

Using the two models described above the reaction controller 14 is able to continuously control the reaction so that it is running for optimal production of chemical C.

The reaction optimisation system that has been described may be implemented in a number of different ways. One possible method would be in a layered glass construction referred to as a chip. Chips are also constructed from a variety of plastics for use in Chemistry and Biology research fields.

A cross-section of a chip is shown in Fig. 8. In such a chip, microchannels 30 (one of which is shown in Fig. 8) are formed in a lower glass layer 31 by a process involving photolithography and wet chemical etching. A top layer 32 is then placed on the lower layer 31 and the surfaces are fused at elevated temperatures.

Holes may be drilled or powder blasted into the top layer creating reservoirs 1, 2 for holding chemicals A and B. Chemicals may be pipetted into the reservoirs manually or with a robot. For off chip pumping it is necessary to connect to the chip using a connector that aligns with a hole and seals onto the surface of the chip.

Electro-Osmotic flow (EOF), gas pressure driven flow piezoelectric pumping or off chip displacement pumping may be used as the pumps 3, 4 to pump fluids along microchannels. For off chip displacement pumping two syringe pumps can be used with a valve arrangement that allows continuous flow of reagents. Fluid flow rate can be determined accurately based on swept volume of the syringe.

The sensors 11, 12, 13 can be infra red absorption sensors, UV light sensors, nuclear magnetic resonance sensors or electrode pairs for sensing impedance. Implementation of the electrode pairs is described in our co-pending application GB 0203661.4.

Examples of the use of microreactors in industry pilot plant include:

- Production of acrylates such as poly(methyl-methacrylate) (PMMA) by a radical polymerisation reaction.

- Fine chemical synthesis involving a ketone reduction reaction using Grignard reagent.

Microreactors also have many potential uses in the laboratory, for example in the synthesis of compounds in pharmaceutical and agrochemical research labs. One reaction that has been carried out successfully in a laboratory microreactor is the Wittig reaction.

This reaction is essentially an A + B → C reaction where two of the starting compounds may be combined (without reacting) in one reservoir to form A, the other starting compound forms B and the three compounds synthesised form product C. The reaction is typically carried out in solution (e.g. in methanol).

The Wittig reaction results in the formation of a carbon - carbon bond and is used in the synthesis of organic molecules. In pharmaceutical research labs this reaction is frequently used in the synthesis of potential drug candidates. The Wittig reaction is also used in industry for a variety of syntheses, for example in the synthesis of vitamin A.

The Wittig reaction may be optimised in a microreactor as described previously by varying the flow rates of the starting reagents A and B whilst measuring a characteristic of the reaction fluid. The characteristic measured could be the impedance, infrared absorbance, UV absorbance or nuclear magnetic resonance. Taking the example of measuring the impedance of the reaction fluid as described in our co-pending application (Agents ref: 59265/000). The impedance of a fluid is related to the amount of charge on the fluid particles and the mobility of these particles. During the Wittig reaction charge is redistributed between molecules and molecules with different mobility are formed. As a result the impedance of the starting reagents is likely to differ from the impedance of the reaction products. By monitoring the impedance of the reaction fluid the Wittig reaction may be optimised as described previously.

**Claims**

1. A microreactor comprising a reaction channel; a first reaction fluid supply system comprising a reservoir of a first reaction fluid, a means to deliver a controlled amount of the first reaction fluid to flow through the reaction channel, and means to monitor the flow of the first reaction fluid into the reaction channel; a second reaction fluid supply system comprising a reservoir of a second reaction fluid, a means to deliver a controlled amount of the second reaction fluid to flow through the reaction channel, and means to monitor the flow of the second reaction fluid into the reaction channel; a sensor to monitor a characteristic of the reaction fluid produced when the first and second reaction fluids react; and a controller which receives inputs from the means to monitor the flow of the first and second reaction fluids and from the sensor and controls the means to deliver the controlled amount of first and second reaction fluids to the reaction channel, wherein the controller is arranged to vary across a range of values the relative proportions of the first and second reaction fluids fed to the reaction channel and to detect the relative proportions of the first and second reaction fluids which optimise the yield of the reaction product.

2. A microreactor according to claim 1, wherein the controller is arranged to vary the overall amount of the first and second fluids supplied to the reaction channel at the optimum relative proportions to determine the maximum overall flow rate at which completion of the reaction still occurs.

3. A microreactor according to claim 1 or claim 2, wherein the controller is arranged to vary the relative proportions of the reaction fluids across a range of values from pure first reaction fluid to pure second reaction fluid.

4. A microreactor comprising a reaction channel; a first reaction fluid supply system comprising a reservoir of a first reaction fluid, a means to deliver a controlled amount of the first reaction fluid to flow through the reaction channel, and means to monitor the flow of the first reaction fluid into the reaction channel; a second reaction fluid supply system comprising a reservoir of a second reaction fluid, a means to deliver a controlled amount of the second reaction fluid to flow through the reaction channel, and means to monitor the flow of the second reaction fluid into the reaction channel; a sensor to monitor a characteristic of the reaction fluid produced when the first and second reaction fluids react; and a controller which receives inputs from the means to monitor the flow of the first and second reaction fluids and from the sensor and controls the means to deliver the controlled amount of first and second reaction fluids to the reaction channel, wherein the controller is arranged to vary the overall amount of the first and second fluids supplied to the reaction channel at a fixed relative proportion to determine the maximum overall flow rate at which completion of the reaction still occurs.

5. A method of reaction optimisation in a microreactor having a reaction channel, the method comprising supplying first and second reaction fluids to flow through the channel, monitoring the flows of the two reaction fluids, monitoring the amount of reaction fluid in the reaction channel, varying the relative proportions of the two reaction fluids and determining the relative proportions of the first and second reaction fluids which optimise the yield of the reaction product.

6. A method according to claim 5, further comprising varying the overall amount of the first and second fluids supplied to the channel at the optimum relative proportions and determining the maximum overall flow rate at which completion of the reaction still occurs.

7. A method according to claim 5 or claim 6, further comprising determining an optimum reaction characteristic by the steps of measuring the reaction characteristic purely of the first reaction fluid; measuring the reaction characteristic purely of the second reaction fluid; generating a no-reaction line which is a straight line in between the two measured values for the pure reaction products; measuring the reaction characteristic as the relative proportions of the fluids are varied across a range of values; and determining the relative proportions of the first and second reaction fluids at which the reaction characteristic differs to the greatest extent from the no-reaction line.

8. A method of reaction optimisation in a microreactor having a reaction channel, the method comprising supplying first and second reaction fluids to flow through the channel, monitoring the flows of the two reaction fluids, monitoring the amount of reaction fluid in the reaction channel, varying the overall amount of the first and second fluids supplied to the channel at a fixed relative proportion and determining the maximum overall flow rate at which completion of the reaction still occurs.

FIG. 1.

A — 1
P — 3
Formation of product C
Collection pot for C or another microfluidic device — 8
Flow junction — 5
Reaction zone — 7
P — 4
B — 2
6

FIG. 2.

A — 1
17
P — 3
18
14
15
11
Reaction fluid
13
Collection pot or another microfluidic device — 8
REACTION CONTROLLER
5
6
Reaction zone — 7
16
12
19
P — 4
B — 2

FIG. 3.

Characteristic of reaction fluid, R

$R_A$

20

21

No-reaction line $(R_{A+B})$

$R_B$

100% A

100% B

## FIG. 4.

Characteristic
of reaction
fluid, R

$R_{CMAX}$

Max difference

20

$R_A$

No-reaction
line ($R_{A+B}$)

21

Optimal ratio
of A and B

22

$R_B$

100% A                                100% B

## FIG. 5.

Characteristic
of reaction
fluid, R

Max difference

$R_A$

21

$R_{CMAX}$

20

$R_B$

22

100% A                                100% B

Optimal ratio of A and B

8

FIG. 6.

Characteristic of reaction fluid, R

$R_{CMAX}$

Completion

24

23

$R_{A+B}$

25

0

Flow-rate of A and B

Optimal point: highest flow-rate for completed reaction

FIG. 7.

Characteristic of reaction fluid, R

$R_{A+B}$

23

Completion

$R_C$

24

25

0

Flow-rate of A and B

Optimal point: highest flow-rate for completed reaction

FIG. 8.

LAYER 2

100um

32

Fused surfaces

LAYER 1

30

31

Microchannel